# EUROPEAN PATENT APPLICATION

(11) **EP 3 989 536 A1**
(43) Date of publication of application: **27.04.2022**
(21) Application number: 21201658.8
(22) Date of filing: 08.10.2021
(51) Int. Cl.: H04N 7/14, H04N 7/15, H04N 21/45, H04N 21/454

(54) **CONTENT RATED DATA STREAM FILTERING**

(30) Priority: 21.10.2020 US 202017076633
(71) Applicant: Plantronics, Inc., Santa Cruz, California 95060 (US)
(72) Inventor: GROVER, Jonathan, Santa Cruz, CA 95060 (US); BRAN, Cary Arnold, Vashon, WA 98070 (US)
(74) Representative: Forresters IP LLP

(57) **Abstract**

A computer implemented method may include determining a content rating level to apply to streaming content; separating at least one stream out from the streaming content; detecting that the at least one stream fails to satisfy the content rating level; and blocking at least a portion of the at least one stream in response to the at least the portion of the at least one stream failing to satisfy the content rating level.

## Description

### BACKGROUND

Streaming content, including live teleconference streams, may accidentally include inappropriate content. For example, consider the scenario in which users are connected via a conference call. One or more of the users may be located in their home environment or in an informal work environment. During the conference call, when a live video and/or audio stream is being transmitted from a user's device, a user or another individual located with the user may forget or ignore the level of formality associated with the conference call. For example, the user may have an inappropriate background object, the individual may make an obscene gesture or use profanity, or the user may forget that there is a live video stream and take the conferencing device to an inappropriate place. Meanwhile, because of the conference call being live, the user's or individual's actions and objects are immediately captured and transmitted to the other attendees. A challenge is to prevent inappropriate content from being included in streaming content. Such challenge is difficult when the streaming content is being presented live.

### SUMMARY

In general, in one aspect, one or more embodiments relate to a computer implemented method that includes determining a content rating level to apply to streaming content; separating at least one stream out from the streaming content; detecting that the at least one stream fails to satisfy the content rating level; and blocking at least a portion of the at least one stream in response to the at least the portion of the at least one stream failing to satisfy the content rating level.

In general, in one aspect, one or more embodiments relate to a system that includes a processor and a memory. The memory includes an application, wherein the application executes on the processor, uses the memory, and is configured for: determining a content rating level to apply to streaming content, separating at least one stream out from the streaming content, detecting that the at least one stream fails to satisfy the content rating level; and blocking at least a portion of the at least one stream in response to the at least the portion of the at least one stream failing to satisfy the content rating level.

In general, in one aspect, one or more embodiments relate to a set of one or more non-transitory computer readable mediums including computer readable program code for determining a content rating level to apply to streaming content; separating at least one stream out from the streaming content; detecting that the at least one stream fails to satisfy the content rating level; and blocking at least a portion of the at least one stream in response to the at least the portion of the at least one stream failing to satisfy the content rating level.

Other aspects of the invention will be apparent from the following description and the appended claims.

### BRIEF DESCRIPTION OF DRAWINGS

FIG. 1A and FIG. 1B show diagrams of systems in accordance with disclosed embodiments.
FIG. 2, FIG. 3, and FIG. 4 show flowcharts in accordance with disclosed embodiments.
FIG. 5 shows an example in accordance with disclosed embodiments.

### DETAILED DESCRIPTION

Specific embodiments of the disclosure will now be described in detail with reference to the accompanying figures. Like elements in the various figures are denoted by like reference numerals for consistency.

In the following detailed description of embodiments of the disclosure, numerous specific details are set forth in order to provide a more thorough understanding of the disclosure. However, it will be apparent to one of ordinary skill in the art that the disclosure may be practiced without these specific details. In other instances, well-known features have not been described in detail to avoid unnecessarily complicating the description.

Throughout the application, ordinal numbers (*e.g.,* first, second, third, *etc.*) may be used as an adjective for an element (*i.e.,* any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

In general, a video conferencing device prevents the transmission or presentation of inappropriate content. Inappropriate content is content detected to not comply with a content rating level. The video conferencing device generates or receives streaming content that includes one or more content sharing streams, audio streams, video streams, *etc.* The video conferencing device analyzes the audio and/or video streams to determine if the streams include inappropriate content. The inappropriate content may include images of inappropriate objects and audio of inappropriate speech. The video stream may be analyzed by processing the video frames from the video stream with an artificial intelligence algorithm that identifies objects in the video stream and identifies whether the objects in the video stream are appropriate. The audio stream may be analyzed by processing the audio data by transcribing the audio stream to text, filtering the text for keywords, and processing the text with artificial intelligence algorithms for inappropriate speech. When inappropriate objects or speech are identified in the streams of the content, the video conferencing device may mute some or all of the content that includes the inappropriate objects or speech.

A video stream may be a stream from a camera or a screen share stream, screen shared content, a stream from one application window, *etc.* An audio stream may be a stream from a microphone, an audio stream of the system output, an audio stream from one application, *etc.*

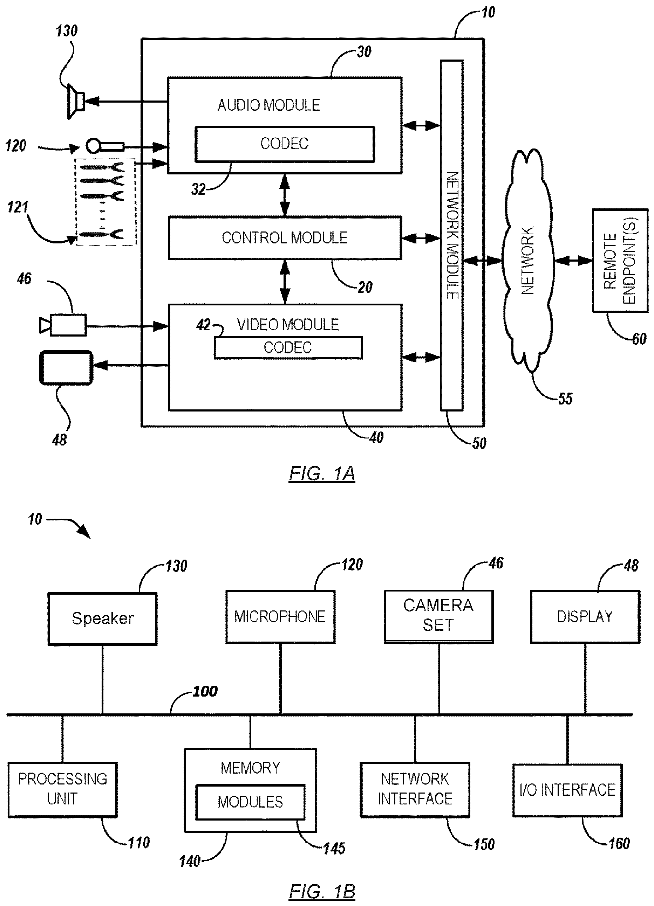

FIG. 1A and FIG. 1B show diagrams of embodiments that are in accordance with the disclosure. FIG. 1A shows an example of an endpoint. FIG. 1B shows an example of components of an endpoint. The embodiments of FIG. 1A and FIG. 1B may be combined and may include or be included within the features and embodiments described in the other figures of the application. The features and elements of FIG. 1A and FIG. 1B are, individually and as a combination, improvements to the technology of machine learning. The various elements, systems, and components shown in FIG. 1A and FIG. 1B may be omitted, repeated, combined, and/or altered as shown from FIG. 1A and FIG. 1B. Accordingly, the scope of the present disclosure should not be considered limited to the specific arrangements shown in FIG. 1A and FIG. 1B.

Turning to FIG. 1A, FIG. 1A illustrates a possible operational environment for example circuits of this disclosure. Specifically, FIG. 1A illustrates a conferencing apparatus or endpoint (10) in accordance with an embodiment of this disclosure.

The conferencing apparatus or endpoint (10) of FIG. 1A communicates with one or more remote endpoints (60) over a network (55). The endpoint (10) includes an audio module (30) with an audio codec (32), and a video module (40) with a video codec (42). The audio and video modules (30, 40) operatively couple to the control module (20) and the network module (50). The modules (30, 40, 20, 50) include dedicated hardware, software executed by one or more processors, or a combination thereof. In some examples, the video module (40) corresponds to a graphics processing unit (GPU), software executable by the graphics processing unit, a central processing unit (CPU), software executable by the CPU, an image processor (also referred to as an image signal processor (ISP)) that processes raw image data from the camera set (46), an application processor that executes applications and other programs of the modules (30, 40, 20, 50), *etc.* In some examples, the control module (20) includes a CPU or application processor, executable software, or a combination thereof. In some examples, the network module (50) includes one or more network interface devices, a CPU, software executable by the CPU, or a combination thereof. In some examples, the audio module (30) includes a CPU, software executable by the CPU, a sound card, or a combination thereof. In some examples, the camera set (46) includes an image processor, image processing software, or a combination thereof. The different processors, programs, and applications running on the endpoint (10) may communicate with each other using application programming interfaces (APIs) exposed by the processors, programs, and applications.

The control module (20) of the endpoint (10) determines a content rating level to apply to streaming content from multiple settings and/or participants of the streaming content. The control module (20) separates out the individual audio and video streams that form the streaming content. The control module (20) determines if audio and video streams of streaming content satisfy the content rating level by detecting rating levels of the streams and comparing the stream rating levels (e.g., a video rating level of a video stream or an audio rating level of an audio stream) to the content rating level. The control module (20) blocks at least a portion of the data streams that do not satisfy the content rating level.

The endpoint (10) may apply rating levels to streaming content captured by the endpoint (10) prior to locally displaying the streaming content and sending the streaming content to the remote endpoints (60). The endpoint (10) may also apply rating levels to streaming content received from remote endpoints (60) before presenting the remote streaming content on the endpoint (10). Additionally, streaming content may have rating levels applied by external servers that pass the content between the endpoints.

In general, the endpoint (10) can be a processing device with playback capabilities including conferencing devices, videoconferencing devices, personal computers with audio or video conferencing abilities, laptop computers, mobile devices, smartphones, or any similar type of communication device. The endpoint (10) is configured to generate near-end audio and video streams and to receive far-end audio and video streams from the remote endpoints (60). The endpoint (10) is configured to transmit the near-end audio and video streams to the remote endpoints (60) and to initiate local presentation of the far-end audio and video streams. The endpoint (10) may also be embodied as headphones or earbuds that may process and play audio streams without video streams.

The microphone (120) captures an audio stream and provides the audio stream to the audio module (30) and audio codec (32) for processing. The microphone (120) can be a table or ceiling microphone, a part of a microphone pod, an integral microphone to the endpoint (10), or the like. Additional microphones (121) can also be provided. Throughout this disclosure all descriptions relating to the microphone (120) apply to any additional microphones (121), unless otherwise indicated. The endpoint (10) may use the audio stream captured with the microphone (120) for the near-end audio stream.

The camera set (46) captures a video stream and provides the captured video stream to the video module (40) and video codec (42) for processing to generate the near-end video stream. For each video frame of near-end video stream captured by the camera set (46), the control module (20) or the video module (40) may crop the video frame to the view region based on a selected view. In general, a video frame (also referred to as a frame) is a single still image in a video feed or video stream, that together with the other video frames form the video stream sent between endpoints.

The endpoint (10) uses the codecs (32, 42) to encode the near-end audio stream and near-end video stream according to an encoding standard, such as MPEG-1, MPEG-2, MPEG-4, H.261, H.263, H.264, *etc.* Then, the network module (50) outputs the encoded near-end audio stream and encoded video stream to the remote endpoints (60) via the network (55) using an appropriate protocol. Similarly, the network module (50) receives the far-end audio and video streams via the network (55) from the remote endpoints (60) and sends these to their respective codecs (32, 42) for processing. Eventually, a speaker (130) outputs the far-end audio stream (received from a remote endpoint (60)), and a display (48) outputs the far-end video stream. The display (48) also outputs the corrected near-end video stream in some embodiments.

Thus, FIG. 1A illustrates an example of an improved computer that applies content rating levels to streaming content and blocks streams that do not satisfy the content rating levels. In particular, the device of FIG. 1A may operate according to one of the methods described further below with reference to the other figures of the application. As described below, these methods improve the functionality of a computer. The endpoint (10) may be a computer that implements the methods described herein. A computer, as used herein, refers to any device capable of processing instructions. For example, a computer may be a headset with an integrated microprocessor, a conferencing device, a desktop, a laptop, a tablet, a mobile device, *etc.*

FIG. 1B illustrates components of the conferencing endpoint (10) of FIG. 1A with additional detail. The endpoint (10) includes the processing unit (110), the memory (140), the network interface (150), and the general input/output (I/O) interface (160) coupled via the bus (100). As above, the endpoint (10) has the base microphone (120), the speaker (130), the camera set (46), and the display (48).

The processing unit (110) may include one or more processors, including a CPU, a GPU, an application processor, *etc.* The memory (140) is a computer readable medium that may be any conventional memory such as synchronous dynamic random access memory (SDRAM) and can store modules (145) in the form of software and firmware with instructions, programs and data for controlling the endpoint (10). The stored modules (145) include the various video and audio codecs (42,32) and software components of the other modules (20, 30, 40, 50) discussed previously. Moreover, the stored modules (145) can include operating systems, a graphical user interface (GUI) that enables users to control the endpoint (10), and other algorithms for processing audio/video streams.

The network interface (150) provides communications between the endpoint (10) and remote endpoints (60). By contrast, the general I/O interface (160) can provide data transmission with local devices such as a keyboard, a mouse, a printer, an overhead projector, a display, external loudspeakers, additional cameras, microphones, *etc.*

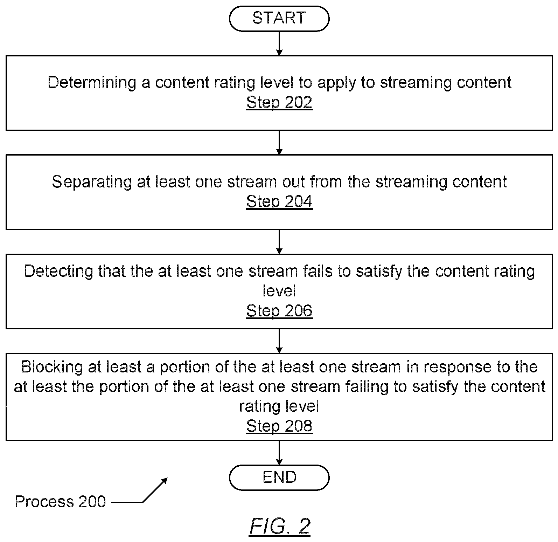

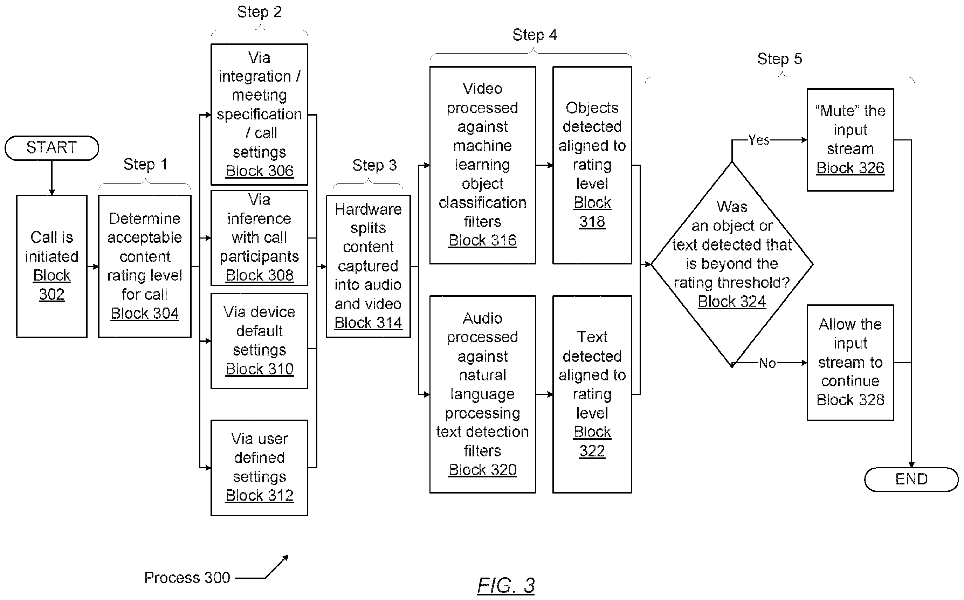

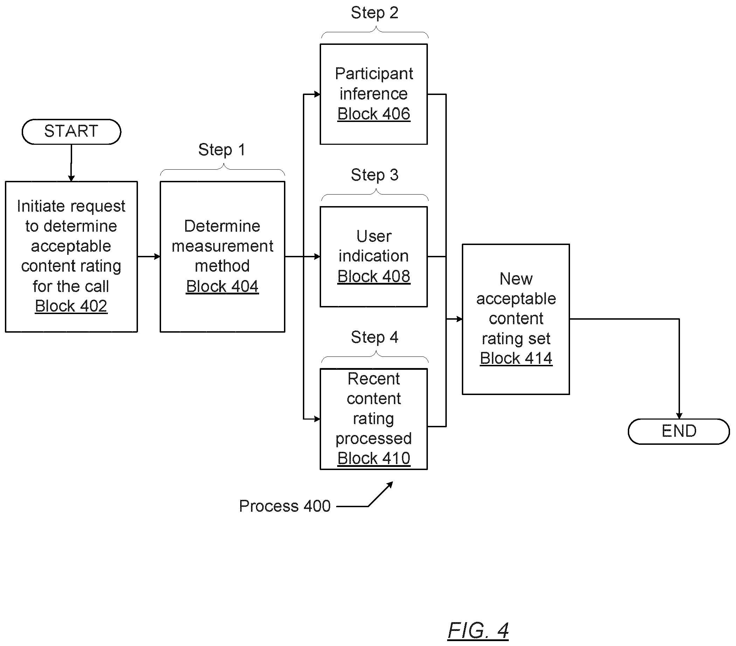

FIGs. 2, 3, and 4 shows a flowchart of a method in accordance with one or more embodiments of the disclosure. FIG. 2 shows the process (200) that blocks streams based on the content rating level applied to streaming content. FIG. 3 shows the process (300) in a more detailed diagram for blocking streams based on rating levels. FIG. 4 shows the process (400) for identifying the content rating level. While the various steps in the flowcharts are presented and described sequentially, one of ordinary skill will appreciate that at least some of the steps may be executed in different orders, may be combined or omitted, and at least some of the steps may be executed in parallel. Furthermore, the steps may be performed actively or passively. For example, some steps may be performed using polling or be interrupt driven in accordance with one or more embodiments. By way of an example, determination steps may not have a processor process an instruction unless an interrupt is received to signify that condition exists in accordance with one or more embodiments. As another example, determinations may be performed by performing a test, such as checking a data value to test whether the value is consistent with the tested condition in accordance with one or more embodiments.

Turning to FIG. 2, in Step 202, a content rating level to apply to streaming content is determined by a computer. The content rating level identifies the type of content that is appropriate in the streaming content. The rating level applied to the streaming content identifies the minimum rating level that is acceptable for the streams of the streaming content. The content rating level may be automatically determined by a computer using a set of rules based on the settings and participants linked to the streaming content and then be retrieved from a repository.

As an example of rating levels, a rating of "Business Professional" may be for business communication that precludes nudity and harsh language, a rating of "Casual" may be between friends that precludes nudity, and a rating of "Intimate" may be between spouses. Different ratings systems may be used, including the motion picture association (MPA) film rating system.

In one embodiment, the streaming content is part of a call and determining the content rating level may include identifying settings of the call and identifying participants of the call. The settings may be from a group of call settings, a group of device default settings, a group of user defined settings, *etc.* Each group of settings may identify the content rating level and rules that trigger for specific rating levels. For example, when a participant is identified as a manager of an employee, the "Business Professional" rating level may be triggered. As another example, when the call is between two spouses, the "Intimate" rating level may be triggered. As a further example, if the endpoint is located at a place of business (e.g., an office of the employer), the "Business Professional" rating level may be triggered and applied to the streaming content. The settings may be identified from information in call metadata (calling party identifier, called party identifier, *etc.*) and from information stored on the endpoint (default settings, user specified settings, *etc.*)*.*

In one embodiment, the system may identify a call setting that specifies the content rating level within the metadata of a call, identify a participant of a call for which a specific content rating level is specified, identify a device default setting that specifies the content rating level for a call, and identify a user defined setting that specifies the content rating level for the call. The system may then select the strictest content rating level to use for the call.

In Step 204, at least one stream is separated out from the streaming content. Separating out of at least one stream refers to a process of starting to consider each stream individually. Thus, separating out of at least one stream may or may not involve an active step of dividing the streaming content into multiple streams. The streaming content may include one or multiple streams of data, each of which may be an audio stream, a video stream, or the like. For example, streaming content may include a single audio stream. As another example, the streaming content may include multiple video streams and multiple audio streams.

In one embodiment, the streaming content includes a video stream that is separated from the streaming content. Separating out the video stream may include decoding the sequence of images that are encoded to make up the video stream. Each of the images from the video stream may be processed against a machine learning object classification filter to detect an object in the video stream (*e.g.,* detecting the presence of nudity).

The object may be aligned to a rating level of a rating system to identify a video rating level of the video stream. The alignment may be performed by identifying a rating level of the object (an object rating level) with a machine learning algorithm and assigning the object rating level to the video stream as the video rating level. The rating system may have multiple levels "Business professional", "Casual", "Intimate", *etc.*)*.* For example, if the object is a shirtless person, the system may identify the rating level of the object in the video fame and the video stream as "Intimate" as the image may contain partial nudity, which may conflict with the rating level for the streaming content. In one embodiment, the machine learning algorithm may be a neural network takes a video frame as an input and outputs the rating level.

In one embodiment, the streaming content includes an audio stream that is separated out from the steaming content. For example, the streaming content may include content encoded according to the H.323 standard with audio encoded using the AAC-LD compression standard. The audio stream may be decoded to recover the raw audio data as the audio stream separated from the streaming content. The audio stream may be processed against a text detection filter to detect text that corresponds to speech in the audio stream.

The detected text extracted from the audio stream may be aligned to the a rating level of a rating system to identify an audio rating level of the audio stream. The alignment may be performed by analyzing text with first machine learning algorithm to identifying a rating level of the text (a text rating level) and assigning the text rating level to the audio stream as the audio rating level. The rating system may have multiple levels "Business professional", "Casual", "Intimate", *etc.*)*.* For example, if the detected text includes harsh language (*e.g.,* certain keywords), then the system may identify the rating level of the text and the audio stream as "Casual" as the audio stream may contain harsh language that is not acceptable under a stricter rating level. In one embodiment, the machine learning algorithm may be a neural network takes the text as an input and outputs the rating level.

In Step 206, the system detects if the at least one stream fails to satisfy the content rating level. The detection may be made by comparing the rating level of a stream to the rating level of the content.

When the streaming content includes a video stream, the system may determine that a video rating level of the video stream is beyond the content rating level. For example, a video stream may include an image with an object that triggers a video rating level of "Intimate", which may be beyond the content rating level of either "Business Professional" or "Casual". An example of the relationship between rating levels (e.g., higher or lower levels) is provided further below.

When the streaming content includes an audio stream, the system may determine that an audio rating level of the audio stream is beyond the content rating level. For example, an audio stream may include language that triggers a audio rating level of "Casual", which may exceed the content rating level of "Business Professional".

In Step 208, portions of streams are blocked when the content rating level is not satisfied. In one embodiment, the portions of the streams are selectively blocked so that only the portion of the steam with a rating level beyond the content rating level is blocked. For example, when streaming content includes both an audio stream and a video stream, the audio stream may be blocked (muted) while the video stream continues to play when the audio stream includes a portion with a rating level beyond the acceptable rating level for the content (*i.e.,* beyond the content rating level). Similarly, the video stream, or an object within the video stream, may be blocked (blacked out, fuzzed out, *etc.*) while the audio stream continues to play when the video stream includes a portion with a rating level beyond the content rating level.

In one embodiment, an object detected in the video stream is blocked from the streaming content. The location of the object within an image from the video stream may be determined. The system may block out the portion of the image that includes and surrounds the object. Blocking out the object may change the effective rating level of the streaming content to satisfy the content rating level.

In one embodiment, a portion of the audio stream from the streaming content is blocked. The portion of the audio stream that is blocked may be the voice of a single speaker that is removed from the audio stream.

Turning to FIG. 3, the process (300) is performed with several blocks in multiple steps. In Block 302, a call is initiated. The call is initiated with an endpoint.

In Step 1 (Block 304), after the call is initiated, the process (300) determines the acceptable rating level for the content of the call, or "Content Rating" for this call. As an example, a call between two business professionals may have a rating of "Business Professional", whereas a call between two friends may have a rating of "Casual", whereas a call between two spouses may have a rating of "Intimate". Different content rating systems may be used, including the movie industry MPAA film rating system, and in the video game industry ESRB rating system.

In Step 2 (Blocks 306, 308, 310, and 312), the process (300) uses one of more methods to determine the appropriate content rating level for the call.

In Block 306, the content rating level is determined via integration with the call system, meeting specifications, or call settings. For example, a call system may only allow certain types of ratings (e.g. "Business Professional") depending on its intended use or legal terms and conditions of using the system. A meeting may be scheduled and have meta data attached to it indicating the type of content rating. A user may specify the content rating level ad hoc, such as at the start of the call.

In Block 308, the content rating level is determined via inference with the call participants. The system may retrieve the user identifiers (*e.g*., email addresses) for each of the participants of a call from the metadata of the streaming content, map the user identifiers to a minimum rating level defined for each user identifier or group of user identifiers, and identify the strictest rating level as the content rating level to use. The process (300) may identify context about the call participants (*e.g*., organizational chart level, participant relationships (*e.g.,* married), *etc.*) and adjust the content rating level dynamically for the call participants as participants join and leave a call. For example, when the chief executive officer (CEO) of a company is a participant (*e.g.,* identified with a user identifier, such as an email address in the metadata of the streaming content), the system may automatically infer the content rating level to be "Business Professional". When speaking with one's spouse, the system may automatically infer the content rating level to be "Intimate". A social graph may be used, including an organizational hierarchy or other meta data that identifies the status of and relationships between the call participants.

In Block 310, the content rating level is determined via device default settings. A device may be programmed with default settings for the acceptable content rating level. For example, a video camera for an enterprise business may be given a default content rating level of "Business Professional".

In Block 312, the content rating level is determined via user defined settings. A user of a device may define local settings (*e.g.,* using a computer or a hardware control, such as a physical button, on the hardware) for the acceptable content rating level to be applied to calls received with the device.

In Step 3 (Block 314), the hardware device takes in input content and separates the content into component streams, *e.g.,* video streams and audio streams. In one embodiment, (*e.g.,* when the device is a headset) the hardware may only receive a single modality of input (*i.e.,* the content may only include an audio stream). In one embodiment, different streams may be from different sources of input and the hardware does not have to split a combined stream into separate component streams. In one embodiment, the process (300) may run in software on a companion device (*e.g.,* a personal computer or mobile phone), and the input streams of the content may already be separated. The separated input streams are maintained in a time-locked fashion (*i.e.,* identification of what audio input was at time X and identification of what video input was at time X is maintained) to allow the component streams to be combined or recombined.

In Step 4 (Blocks 316, 318, 320, and 322) the input streams are processed. The input streams may be processed at an endpoint or at a remote endpoint or server.

In Block 316, video streams are passed through one or more object detection, behavioral detection filters, or other machine learning filters. The filters may identify objects within the video content shown in the video input stream.

In Block 318, the video content is aligned with rating levels for that content. For example, a series of video frames showing a "gun" (detected via object detection) may be aligned to a rating of "Casual"; a series of video frames showing nudity may be aligned to a rating of "Intimate"; a series of video frames showing only faces of people may be aligned to a rating of "Business Professional"; and a series of video frames showing someone undressing, even absent nudity itself, may be aligned to a rating of "Intimate".

In Block 320, audio streams are passed through one or more natural language processing text detection filters, or other machine learning filters. In one embodiment, the audio streams are transcribed using automated speech recognition (ASR) technology in the hardware and software of an endpoint or server.

In Block 322, the output text is processed and then aligned with rating for that content. For example, text that includes swear words may align to a content rating of "Casual".

In Step 5 (Blocks 324, 326, and 328) the rating levels for input component streams of the streaming content are compared to the acceptable content rating level for the streaming content (in Block 324). If the rating level for the component streams "passes" the content rating level for the streaming content, then (in Block 328) the input is allowed to pass through and continue onto the call (where it is transmitted). If the content rating does not pass the acceptable content rating threshold, then (in Block 326) the component streams are "muted" or blocked from transmission. The component streams may be individually blocked, blocked as a group, individually partially blocked, *etc.*

In one embodiment, muting at least a portion of the streaming content may be only for the duration of the specific input stream where the content rating did not match the acceptable content rating. In one embodiment, the streaming content may be muted for a predetermined period of time (*e.g.,* 2 seconds) after the unacceptable content is detected. In one embodiment, the detection of unacceptable content may disconnect the call or disconnect the hardware device from providing input for the call.

In one embodiment, the action of muting an input stream may result in a temporary absence of data being transmitted from the hardware device to the call. In one embodiment, the action of muting an input stream may result in the hardware device transmitting a black screen or notification screen to the call or similarly transmitting an audio prompt (*e.g.* "The user has been muted for content violation") to the call.

In one embodiment, the detection of unacceptable content (*e.g.,* unacceptable video content) may mute audio and video streams simultaneously. In another embodiment, the detection of unacceptable content via an input stream may only mute that input stream.

Different content ratings may be correspond to specified numerical thresholds. More stringent ratings (*i.e.,* with more content that is unacceptable to it) may be given larger numbers. In such cases, a lower (less stringent) rating level for content, would be less than the numerical rating of the more stringent rating level for content (in a mathematical comparison). The table below provides an example of rating levels and numerical values.

| Rating Level | Numeric Value |
|---|---|
| Intimate | 1 |
| Casual | 2 |
| Business Professional | 3 |
| Approved Legal Disclosure | 4 |

For example, a call may have an acceptable rating of Business Professional. If the process (300) identifies streaming content in the call as Intimate (rating level 1) then it would not be transmitted since the identified rating level is less than the minimum acceptable rating level (*i.e.,* 1 < 3). However, if the streaming content is rated as Business Professional (rating level 3), the streaming content would be transmitted since the identified rating level of the stream(s) of the content is at least equal to the acceptable rating level for the call (*i.e.,* 3 = 3). Similarly, if the system identifies the content as an Approved Legal Disclosure (rating level 4) then, the streaming content would be transmitted since the identified rating level is greater than the acceptable rating level (4 > 3).

Turning to FIG. 4, acceptable content in the call may dynamically change over the course of the call. The process (400) illustrates dynamic sampling to determine the current acceptable content rating at any time, T, after a call has started. Different implementation may have dynamic acceptable content rating determination run periodically (*e.g.,* every 3 seconds), ad hoc (based on a user action), or based on an event in the call (*e.g.,* new user joins call, user leaves call, content is shared).

In Block 402, a request is initiated to determine an acceptable content rating level for the call. The request may be initiated in response to receiving an incoming call, a change in the number of participants on a call, a periodic timer expiring, a user action, *etc.*

In Step 1 (Block 404), the method for measuring the rating level of content is determined. The determination of measurement method may be pre-determined or dynamic.

In Step 2 (Block 406), the content is determined based on participant inference. Data or metadata about the participants currently in the call is used to determine the appropriate content level. The participant inference may be based on participant role in an organization. For example, if the CEO is present there may be a more stringent rating than if just junior associates are present.

The participant inference may be based on (business) relationships between the participants of the call. For example, if the process (400) determines that the only participants are spouses, then the process (400) may infer an "Intimate" rating. As another example, if the process (400) determines that the participants are a sales person and a prospective client, then the process (400) may infer a rating of "Business Professional". Further, if the process (400) determines that the participants are a sales person and a client having a long relationship (*e.g.,* a customer relationship management (CRM) database includes data that identifies that the participants first contacted each other 2 years ago), the process (400) may infer a rating of "Casual".

The participant inference may be based on facial recognition alignment. In one embodiment, the process (400) may conduct facial recognition on each participant in a video stream. After identifying each person, the process (400) may align each person with a role. The alignment may be from an existing database mapping between the person, the role, and a rating level. The process (400) may determine the acceptable content rating level based on the most stringent rating level determined for the set of participants identified from the video stream.

The participant inference may be based on facial metadata. In one embodiment, the process (400) may infer, via machine learning, other characteristics of the participants (such as age or gender), and may determine the acceptable content rating level based on those data points from default or category specific mappings between rating levels and the facial metadata.

In Step 3 (Block 408), the content rating level is determined based on a user indication. The system may respond to direct user input of acceptable content ratings. Examples include: a user may press a button (hardware or virtual); a user may respond to a prompt; a user may indicate a verbal content change - *e.g.,* by speaking "Only Business Professional content"; and a user may indicate an acceptable content rating level in the content based off of what is said, *e.g.,* by speaking "Let's keep this conversation away from not safe for work topics", which the process (400) may identify as level 3 "Business Professional".

In Step 4 (Block 410), the process (400) assesses recent content rating levels over a historical period of time for the call and adjusts accordingly. For example, if in the last 1 minute the majority of the participants were "muted" for "Casual" content (when the acceptable content level was previously "Business Professional"), the system may determine that the acceptable content level should be adjusted to be "Casual".

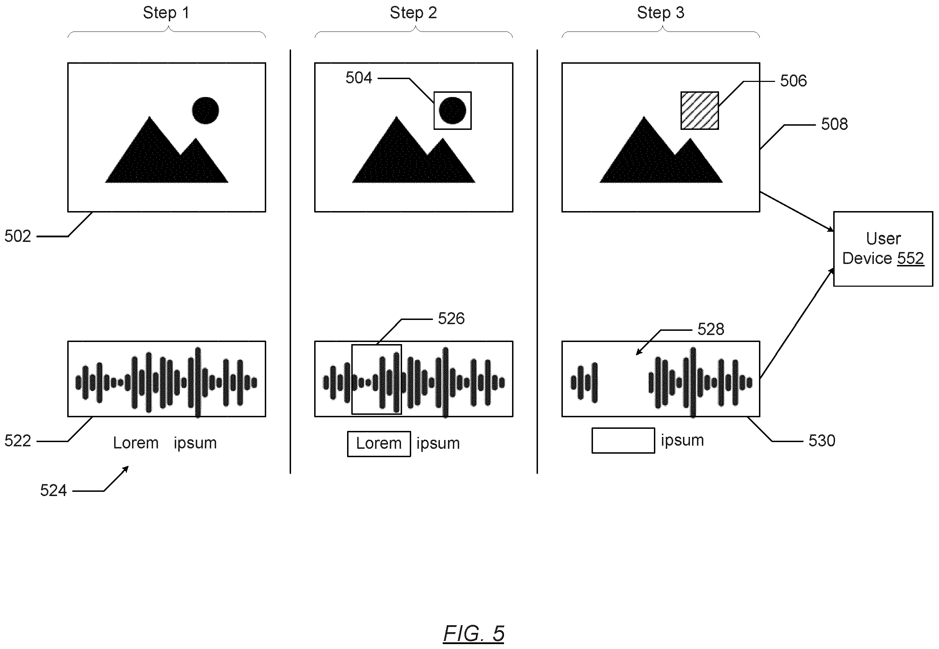

FIG. 5 shows examples in accordance with the disclosure. FIG. 5 shows the processing of data from a video stream and an audio stream. The embodiments of FIG. 5 may be combined and may include or be included within the features and embodiments described in the other figures of the application. The features and elements of FIG. 5 are, individually and as a combination, improvements to the technology of video conferencing systems. The various features, elements, widgets, components, and interfaces shown in FIG. 5 may be omitted, repeated, combined, and/or altered as shown. Accordingly, the scope of the present disclosure should not be considered limited to the specific arrangements shown in FIG. 5.

Turning to FIG. 5, a system is processing a video stream and an audio stream for content being streamed to at least one endpoint. The system identifies a content racing level for the streaming content and then analyzes the streams of the streaming content. The different strains of the streaming content may be processed concurrently in parallel.

In Step 1 for the video stream, the video frame (502) is one of a sequence of video frames extracted from the video stream. In Step 2 for the video stream, the system processing the video stream identifies an object within the video frame (502) and generates the box (504). The box (504) identifies the location of the object within the video frame (502). The object may be extracted from the video frame (502) and is analyzed with a machine learning algorithm to identify the rating level of the object. In Step 3, the object was identified as having a rating level that does not satisfy the content rating level for the streaming content and the system generates the mask (506). The mask (506) is applied to the original video frame (502) to generate the modified video frame (508).

In Step 1 for the audio stream, the audio data (522) is extracted from the audio stream. The audio data (522) is transcribed to identify the text (524). In Step 2 for the audio stream, the system identifies the window (526) that corresponds to speech of the text (524) in the audio stream. The text is analyzed with filters and machine learning algorithms to identify the rating level of the text. In Step 3 for the audio stream, the text was identified as having a rating level that does not satisfy the content rating level for the streaming content and the system generates an audio mask using the window (526). The audio mask is applied to the original audio data (522) to generate the modified audio data (530), which includes the muted portion (528).

The modified audio and video data (530 and 508) is encoded into modified audio and video streams that are recombined to form modified streaming content. The modified streaming content is presented with the user device (552).

In one embodiment, the acceptable rating level may control the pan, zoom, and tracking settings and capabilities of an endpoint. An endpoint may include a camera and the camera's video/audio input capabilities (such as pan/zoom) may be used to align a rating level of the video stream to the appropriate content rating level. A "Business Professional" content rating level may only allow for headshots, a "Casual" content rating level may allow for clothed upper body shots, and an "Intimate" content rating level may allow for additional shots.

For example, for a call where the appropriate content level is "Business Professional", the camera may stay zoomed and track a participant's head, ensuring that the content transmitted is limited to business professional content (*i.e.* the head of the participant). A less restrictive content rating level may allow for showing a wider view (*i.e.* an upper torso being captured) to allow someone to wear a nice dress shirt in the video stream, but with inappropriate shorts or pants.

In one embodiment, muting or blocking of video content may be performed using the pan and zoom settings of an endpoint. A camera of an endpoint may have access to a wider frame of visual content than needs to be transmitted. The field of view of a camera may be adjusted in lieu of muting the input when inappropriate content is detected. The field of view may be changed using the pan/zoom capabilities so that the only content transmitted is content that satisfies the selected content rating level.

For example, a news reporter may stream a news cast from home when a family member walks in view of the camera without wearing appropriate clothing (e.g., not wearing a dress shirt is the inappropriate content in this instance). Upon detecting the inappropriate content, the system may automatically zoom in on the reporter and only transmit a headshot of the reporter (the appropriate content level).

In one embodiment, a noise blocking artificial intelligence algorithm may be used to modify an audio stream instead of muting and audio stream. The system recognizes inappropriate audio content which can be handled by the noise blocking artificial intelligence algorithm. The noise blocking artificial intelligence algorithm may be trained to identify and reject (attenuate) background noise that is not human speech and sounds from sources that are not within the field of view of a camera. The noise blocking artificial intelligence algorithm may take as input one or more audio streams, field of view parameters that identify the field of view of the camera, and a location of the microphones that recorded the audio streams with respect to the camera. The noise blocking artificial intelligence algorithm may output an attenuated audio stream with background noise and sounds from outside the field of view being reduced as compared to an audio stream that is not processed with the noise blocking artificial intelligence algorithm.

When an inappropriate audio stream is detected, the system processes the inappropriate audio stream with the noise blocking artificial intelligence algorithm, and determines if the processed version is still rated as inappropriate (requiring the audio stream to the muted), or if applying the noise blocking artificial intelligence algorithm to the audio stream removed the inappropriate content. In one embodiment, the noise blocking artificial intelligence algorithm identifies physical locations of audio sources from the audio data and attenuates other audio sources that are at locations different from the main speaker.

In one embodiment, the noise blocking artificial intelligence algorithm takes a user input to identify the audio field width and length. The noise blocking artificial intelligence algorithm may then attenuate audio sources that are outside the field width and length specified by the user to proactively "mute" inappropriate content that might be entering from outside the specified field width and length.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Representative features of the disclosure are set out in the following clauses.
1. A computer implemented method comprising:
   determining a content rating level to apply to streaming content;
   separating at least one stream out from the streaming content;
   detecting that the at least one stream fails to satisfy the content rating level; and
   blocking at least a portion of the at least one stream in response to the at least the portion of the at least one stream failing to satisfy the content rating level.
2. The computer implemented method of clause 1, wherein the streaming content is part of a call, and determining the content rating level further comprises:
   identifying a call setting for the call;
   identifying a participant of the call;
   identifying a device default setting for the call; and
   identifying a user defined setting for the call.
3. The computer implemented method of clause 1 or clause 2, wherein the streaming content comprises a video stream, and separating the at least one stream further comprises:
   separating the video stream out from the streaming content as part of the at least one stream;
   processing a video frame from the video stream against a machine learning object classification filter to detect an object in the video frame; and
   aligning the object to the content rating level to identify a video rating level of the video stream, wherein the video rating level is compared with the content rating level to detect whether the video stream fails to satisfy the content rating level.
4. The computer implemented method of any preceding clause, wherein the streaming content comprises a video stream, and detecting that the at least one stream fails to satisfy the content rating level comprises:
   determining that a video rating level of the video stream exceeds the content rating level.
5. The computer implemented method of any preceding clause, wherein the streaming content comprises a video stream, and blocking at least the portion of the at least one stream further comprises:
   blocking an object detected in the video stream from the streaming content.
6. The computer implemented method of clause 5, wherein blocking the object obfuscates the object in a video frame of the video stream while keeping remaining portions of the video frame intact.
7. The computer implemented method of any preceding clause, wherein the streaming content comprises an audio stream, and separating the at least one stream further comprises:
   separating the audio stream out from the streaming content as part of the at least one stream;
   processing the audio stream against a text detection filter to detect text; and
   aligning the text to the content rating level to identify an audio rating level of the audio stream, wherein the audio rating level is compared with the content rating level to detect whether the audio stream fails to satisfy the content rating level.
8. The computer implemented method of any preceding clause, wherein the streaming content comprises an audio stream, and detecting that the at least one stream fails to satisfy the content rating level comprises:
   determining that an audio rating level of the audio stream exceeds the content rating level.
9. The computer implemented method of any preceding clause, wherein the streaming content comprises an audio stream, and blocking at least the portion of the at least one stream further comprises:
   blocking a portion of the audio stream from the streaming content.
10. The computer implemented method of any preceding clause, wherein blocking the at least the portion of the at least one stream further comprises:
   disconnecting from the streaming content.
11. A system comprising:
   a processor;
   a memory;
   the memory comprising an application, wherein the application executes on the processor, uses the memory, and is configured for:
      determining a content rating level to apply to streaming content,
      separating at least one stream out from the streaming content,
      detecting that the at least one stream fails to satisfy the content rating level; and blocking at least a portion of the at least one stream in response to the at least the portion of the at least one stream failing to satisfy the content rating level.
12. The system of clause 11, wherein the streaming content is part of a call, and determining the content rating level further comprises:
   identifying a call setting for the call;
   identifying a participant of the call;
   identifying a device default setting for the call; and
   identifying a user defined setting for the call.
13. The system of clause 11, or clause 12 wherein the streaming content comprises a video stream, and separating the at least one stream further comprises:
   separating the video stream out from the streaming content as part of the at least one stream;
   processing a video frame from the video stream against a machine learning object classification filter to detect an object in the video frame; and
   aligning the object to the content rating level to identify a video rating level of the video stream, wherein the video rating level is compared with the content rating level to detect whether the video stream fails to satisfy the content rating level.
14. The system of any one of clauses 11 to 13, wherein the streaming content comprises a video stream, and detecting that the at least one stream fails to satisfy the content rating level comprises:
   determining that a video rating level of the video stream exceeds the content rating level.
15. The system of any one of clauses 11 to 14, wherein the streaming content comprises a video stream, and blocking at least the portion of the at least one stream further comprises:
   blocking an object detected in the video stream from the streaming content.
16. The system of clause 15, wherein blocking the object obfuscates the object in a video frame of the video stream while keeping remaining portions of the video frame intact.
17. The system of any one of clauses 11 to 16, wherein the streaming content comprises an audio stream, and separating the at least one stream further comprises:
   separating the audio stream out from the streaming content as part of the at least one stream;
   processing the audio stream against a text detection filter to detect text; and
   aligning the text to the content rating level to identify an audio rating level of the audio stream, wherein the audio rating level is compared with the content rating level to detect whether the audio stream fails to satisfy the content rating level.
18. The system of any one of clauses 11 to 17, wherein the streaming content comprises an audio stream, and detecting that the at least one stream fails to satisfy the content rating level comprises:
   determining that an audio rating level of the audio stream exceeds the content rating level.
19. The system of any one of clauses 11 to 18, wherein the streaming content comprises an audio stream, and blocking at least the portion of the at least one stream further comprises:
   blocking a portion of the audio stream from the streaming content.
20. The system of any one of clauses 11 to 19, wherein blocking the at least the portion of the at least one stream further comprises:
   disconnecting from the streaming content.
21. A set of one or more non-transitory computer readable mediums comprising computer readable program code for:
   determining a content rating level to apply to streaming content;
   separating at least one stream out from the streaming content;
   detecting that the at least one stream fails to satisfy the content rating level; and
   blocking at least a portion of the at least one stream in response to the at least the portion of the at least one stream failing to satisfy the content rating level.

## Claims

1. A computer (10) implemented method comprising:
determining (202) a content rating level to apply to streaming content;
separating (204) at least one stream out from the streaming content;
detecting (206) that the at least one stream fails to satisfy the content rating level; and
blocking (208) at least a portion of the at least one stream in response to the at least the portion of the at least one stream failing to satisfy the content rating level.

2. The computer (10) implemented method of claim 1, wherein the streaming content is part of a call, and determining the content rating level further comprises:
identifying (306) a call setting for the call.

3. The computer (10) implemented method of any one of claims 1 to 2, wherein determining the content rating level further comprises:
identifying (308) a participant of the call.

4. The computer (10) implemented method of any one of claims 1 to 3, wherein determining the content rating level further comprises:
identifying (310) a device default setting for the call.

5. The computer (10) implemented method of any one of claims 1 to 4, wherein determining the content rating level further comprises:
identifying (312) a user defined setting for the call.

6. The computer (10) implemented method any one of the preceding claims, wherein the streaming content comprises a video stream, and separating the at least one stream further comprises:
separating (314) the video stream out from the streaming content as part of the at least one stream;
processing (316) a video frame from the video stream against a machine learning object classification filter to detect an object in the video frame; and
aligning (318) the object to the content rating level to identify a video rating level of the video stream, wherein the video rating level is compared with the content rating level to detect whether the video stream fails to satisfy the content rating level.

7. The computer (10) implemented method of any one of the preceding claims, wherein the streaming content comprises a video stream, and detecting that the at least one stream fails to satisfy the content rating level comprises:
determining (324) that a video rating level of the video stream exceeds the content rating level.

8. The computer (10) implemented method of any one of the preceding claims, wherein the streaming content comprises a video stream, and blocking at least the portion of the at least one stream further comprises:
blocking (326) an object detected in the video stream from the streaming content.

9. The computer (10) implemented method of claim 8, wherein blocking the object obfuscates the object in a video frame of the video stream while keeping remaining portions of the video frame intact.

10. The computer (10) implemented method of any one of the preceding claims, wherein the streaming content comprises an audio stream, and separating the at least one stream further comprises:
separating (314) the audio stream out from the streaming content as part of the at least one stream;
processing (320) the audio stream against a text detection filter to detect text; and
aligning (322) the text to the content rating level to identify an audio rating level of the audio stream, wherein the audio rating level is compared with the content rating level to detect whether the audio stream fails to satisfy the content rating level.

11. The computer (10) implemented method of any one of the preceding claims, wherein the streaming content comprises an audio stream, and detecting that the at least one stream fails to satisfy the content rating level comprises:
determining (324) that an audio rating level of the audio stream exceeds the content rating level.

12. The computer (10) implemented method of any one of the preceding claims, wherein the streaming content comprises an audio stream, and blocking at least the portion of the at least one stream further comprises:
blocking (326) a portion of the audio stream from the streaming content.

13. The computer (10) implemented method of any one of the preceding claims, wherein blocking the at least the portion of the at least one stream further comprises:
disconnecting (326) from the streaming content.

14. A system (10) comprising:
a processor (110);
a memory (140); and
the memory (140) comprising an application, wherein the application executes on the processor (110), uses the memory (140), and is configured for executing any one of claims 1 to 13.

15. A set of one or more non-transitory computer readable mediums (140) comprising computer readable program code for carrying out the method of any one of claims 1 to 13.
